# EUROPEAN PATENT APPLICATION

(11) **EP 4 752 801 A1**
(43) Date of publication of application: **03.06.2026**
(21) Application number: 24845108.0
(22) Date of filing: 03.04.2024
(51) Int. Cl.: G06Q 10/0633

(54) **COMPUTER SYSTEM AND SEARCH SUPPORT METHOD**

(30) Priority: 27.07.2023 JP 2023122839
(71) Applicant: Hitachi, Ltd., Tokyo 100-8280 (JP)
(72) Inventor: YOSHIUCHI, Hideya, Tokyo 100-8280 (JP)
(74) Representative: Mewburn Ellis LLP
(86) International application number: PCT/JP2024/013779
(87) International publication number: WO 2025/022723

(57) **Abstract**

Selection of a work flow from among a plurality of work flows is supported. A computer system holds work data acquired in work based on a work flow for each of work flows defining procedures of a plurality of operations, manages the work flow as a directed graph in which one operation is set as one node, compares the plurality of work flows, generates an integrated node by executing, on the basis of a result of the comparison, at least one of processing of integrating a plurality of operations having different order relationships among the work flows and processing of integrating an operation not included in at least one work flow and at least one of an operation executed before the operation and an operation executed after the operation, and generates a directed graph including at least one operation node and at least one integrated node that are not integrated as an integrated work flow for searching for a work flow.

## Description

### Incorporation by Reference

This application claims priority to Japanese Patent Application No. 2023-122839 filed on July 27, 2023, the contents of which are incorporated herein by reference.

### Technical Field

The present invention relates to a data search technique used for analyzing work performed according to a work flow.

### Background Art

Work such as production of products or materials and office procedures is performed according to a work flow that defines the order of operations. In order to realize the efficiency of work and the like, it is important to select operations to be performed and optimize the execution order of the operations.

A work flow can be represented as a directed graph in which an operation is a node. As a technique for generating a directed graph, for example, techniques described in PTL 1 and PTL 2 are known.

PTL 1 describes that "A directed graph creating device includes: an identification unit that refers to an event chain storage unit that stores a plurality of event chains and a directed graph storage unit that stores a directed graph created by integrating the plurality of event chains to identify a path that is not present in any of the plurality of event chains among paths included in the directed graph; a duplication unit that creates a duplication of a most downstream node excluding an end point node of the path and an edge connected to the node among nodes to which a plurality of edges are connected on a downstream side in the identified path; and a deletion unit that deletes, among the duplicated edges, an edge from which any path included in the plurality of event chains is not removed from the directed graph even if the edge is deleted."

PTL 2 describes that "An information processing apparatus 1 classifies each of a plurality of events included in a plurality of response histories 30 related to a motion and a state of a recording target into a motion and a state. The information processing apparatus 1 generates graph information 23 by integration processing based on a plurality of event contents included in the plurality of response histories 30. The information processing apparatus 1 determines validity of the integration processing by verifying whether each path included in the generated graph information 23 passing through the event integrated by the integration processing and classified into the state is included in partial paths of the plurality of response histories 30."

### Citation List

### Patent Literature

PTL 1: JP 2012-194708 A
PTL 2: JP 2019-117442 A

### Summary of Invention

### Technical Problem

In an environment in which work is executed according to various work flows, useful information can be obtained by analyzing a result of work of each work flow. Conventionally, it has been necessary for a user to manually select a work flow to be analyzed. However, when the number of work flows is large, there is a problem that the cost required for selecting a work flow increases.

An object of the present invention is to provide a technique for supporting selection of a work flow from among a plurality of work flows.

### Solution to Problem

A representative example of the invention disclosed in the present application is as follows. That is, a computer system includes: a processor; a storage device connected to the processor; and a network interface connected to the processor, and is configured to: for each of work flows defining procedures of a plurality of operations, hold work data acquired in work based on the work flow; manage the work flow as a directed graph in which one operation is set as one node; compare the plurality of work flows; generate an integrated node by executing, on the basis of a result of the comparison, at least one of processing of integrating the plurality of operations having different order relationships among the work flows and processing of integrating the operation not included in at least one of the work flows and at least one of the operation executed before the operation and the operation executed after the operation; and generate a directed graph including at least one operation node and at least one integrated node that are not integrated as an integrated work flow for searching for the plurality of work flows, and present the generated directed graph to a user.

### Advantageous Effects of Invention

According to the present invention, by presenting an integrated work flow in which a plurality of work flows are integrated, it is possible to easily designate operations included in a work flow to be searched and the order of the operations. Problems, configurations, and effects other than those described above will be clarified by the following description of embodiments.

### Brief Description of Drawings

[FIG. 1] FIG. 1 is a diagram showing an example of a configuration of a system of a first embodiment.
[FIG. 2] FIG. 2 is a diagram showing an example of a configuration of a work data collection device of the first embodiment.
[FIG. 3] FIG. 3 is a diagram showing an example of a configuration of a work data management server of the first embodiment.
[FIG. 4] FIG. 4 is a diagram showing an example of a data structure of data stored in a work data DB of the first embodiment.
[FIG. 5A] FIG. 5A is a diagram showing an example of a data structure of data stored in a work flow DB of the first embodiment.
[FIG. 5B] FIG. 5B is a diagram showing an example of a data structure of data stored in the work flow DB of the first embodiment.
[FIG. 6A] FIG. 6A is a diagram showing an example of a data structure of data stored in an integrated work flow DB of the first embodiment.
[FIG. 6B] FIG. 6B is a diagram showing an example of a data structure of data stored in the integrated work flow DB of the first embodiment.
[FIG. 6C] FIG. 6C is a diagram showing an example of a data structure of data stored in the integrated work flow DB of the first embodiment.
[FIG. 7] FIG. 7 is a flowchart illustrating an example of integrated work flow generation processing executed by the work data management server of the first embodiment.
[FIG. 8A] FIG. 8A is a flowchart illustrating an example of integrated work flow update processing executed by the work data management server of the first embodiment.
[FIG. 8B] FIG. 8B is a flowchart illustrating an example of integrated work flow update processing executed by the work data management server of the first embodiment.
[FIG. 9] FIG. 9 is a flowchart illustrating an example of first order determination processing executed by the work data management server of the first embodiment.
[FIG. 10A] FIG. 10A is a flowchart illustrating an example of second order determination processing executed by the work data management server of the first embodiment.
[FIG. 10B] FIG. 10B is a flowchart illustrating an example of second order determination processing executed by the work data management server of the first embodiment.
[FIG. 11] FIG. 11 is a sequence diagram illustrating a flow of work data search processing in the system of the first embodiment.
[FIG. 12] FIG. 12 is a diagram showing an example of a screen presented by the work data management server of the first embodiment.
[FIG. 13] FIG. 13 is a diagram showing an example of a screen presented by the work data management server of the first embodiment.
[FIG. 14] FIG. 14 is a diagram showing an example of a screen presented by the work data management server of the first embodiment.
[FIG. 15] FIG. 15 is a flowchart illustrating an example of work flow search processing executed by the work data management server of the first embodiment.
[FIG. 16] FIG. 16 is a diagram showing an example of a screen presented by the work data management server of the first embodiment.
[FIG. 17] FIG. 17 is a diagram showing an example of a screen presented by the work data management server of the first embodiment.
[FIG. 18] FIG. 18 is a flowchart illustrating an example of work flow search processing executed by the work data management server of the first embodiment.

### Description of Embodiments

Hereinafter, embodiments of the present invention will be described with reference to the drawings. However, the present invention is not to be construed as being limited to the description of the following embodiments. Those skilled in the art can easily understand that the specific configuration can be changed without departing from the spirit or gist of the present invention.

In the configurations of the invention described below, the same or similar configurations or functions are denoted by the same reference numerals, and redundant description is omitted.

Notations such as "first", "second", and "third" in the present specification are attached to identify components, and do not necessarily limit the number or order.

### First embodiment

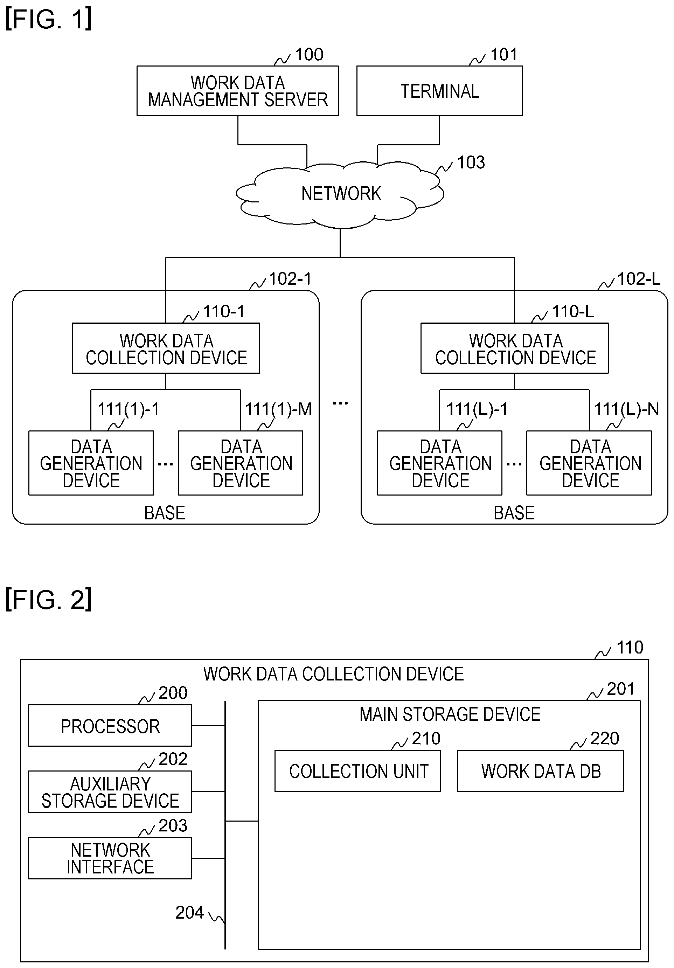

FIG. 1 is a diagram showing an example of a configuration of a system of a first embodiment.

The system includes a work data management server 100, a terminal 101, and a plurality of bases 102. The work data management server 100, the terminal 101, and the plurality of bases 102 are connected via a network 103 such as a wide area network (WAN) and a local area network (LAN).

In the bases 102, work is performed according to a work flow. Work includes, for example, application work, manufacturing work, production work, performance test work, and the like. Note that the present invention is not limited to the contents of work. A work flow represents a procedure of a plurality of operations. A work flow can be represented as a directed graph in which an operation is a node.

The base 102 includes a plurality of data generation devices 111 and a work data collection device 110. The data generation device 111 is a device that generates work data related to work, and is, for example, a sensor, a camera, a terminal manipulated by an operator, or the like. The work data collection device 110 is a device that collects and manages work data. The work data collection device 110 accumulates work data together with information regarding a work flow. The information regarding the work flow is, for example, an identifier of the work flow.

The work data management server 100 acquires and holds work data from the work data collection device 110 of each base 102. In addition, the work data management server 100 accepts a request from the terminal 101 and executes various types of processing.

The terminal 101 is a terminal for transmitting various requests to the work data management server 100.

FIG. 2 is a diagram showing an example of a configuration of the work data collection device 110 of the first embodiment.

The work data collection device 110 includes a processor 200, a main storage device 201, an auxiliary storage device 202, and a network interface 203. The hardware elements are connected via a bus 204.

The processor 200 is a device that performs various arithmetic operations, and executes a program stored in the main storage device 201. The processor 200 executes processing according to the program to operate as a functional unit (module) that realizes a specific function. In the following description, when processing is described using a functional unit as a subject, it indicates that the processor 200 executes a program for realizing the functional unit.

The main storage device 201 is a storage device that stores a program executed by the processor 200 and information executed by the program, and is, for example, a volatile or nonvolatile memory. The main storage device 201 is also used as a work area. The auxiliary storage device 202 is a large-capacity storage device that permanently stores information, and is, for example, a hard disk drive (HDD), a solid state drive (SSD), or the like. The network interface 203 communicates with other devices via a network.

The program and information stored in the main storage device 201 may be stored in the auxiliary storage device 202. In this case, the processor 200 reads the program and information from the auxiliary storage device 202 and loads the program and information into the main storage device 201.

The main storage device 201 stores a program for realizing a collection unit 210 and a work data DB 220. The collection unit 210 collects work data from the data generation device 111. The work data DB 220 is a database that stores work data.

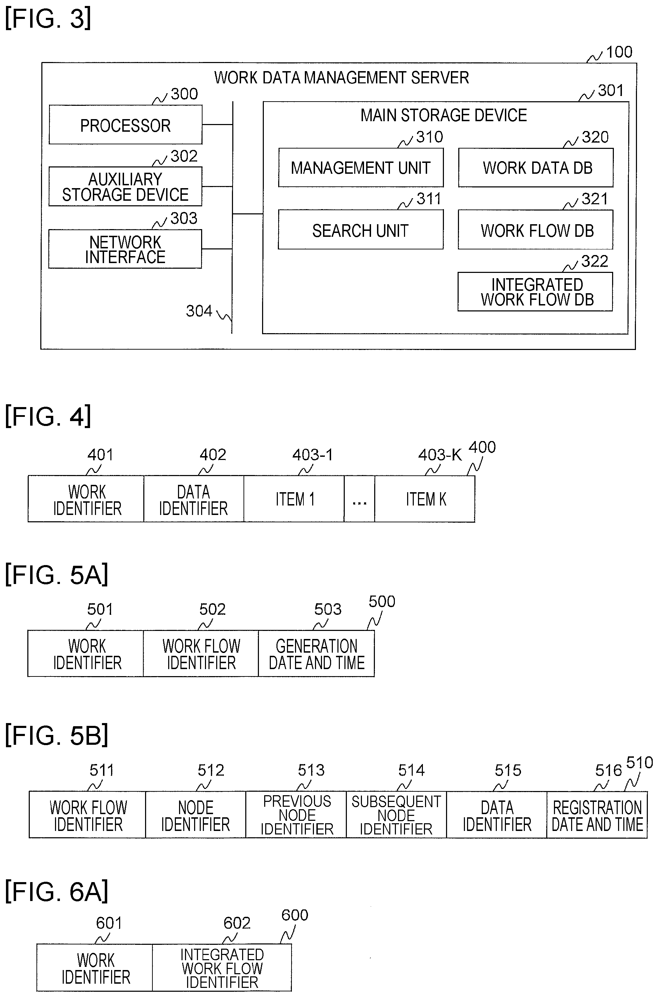

FIG. 3 is a diagram showing an example of a configuration of the work data management server 100 of the first embodiment.

The work data management server 100 includes a processor 300, a main storage device 301, an auxiliary storage device 302, and a network interface 303. The hardware elements are connected via a bus 304.

Since the processor 300, the main storage device 301, the auxiliary storage device 302, the network interface 303, and the bus 304 are the same hardware elements as the processor 200, the main storage device 201, the auxiliary storage device 202, the network interface 203, and the bus 204, the description thereof will be omitted.

The main storage device 301 stores a program for realizing a management unit 310 and a search unit 311. In addition, the main storage device 301 stores a work data DB 320, a work flow DB 321, and an integrated work flow DB 322.

The management unit 310 manages work data and work flows. The search unit 311 searches for work data associated with a work flow according to a request of a user.

The work data DB 320 is a database that stores work data. The work flow DB 321 is a database that stores work flow definition information. The integrated work flow DB 322 is a database that stores integrated work flow definition information used to search for a work flow.

Note that, for each functional unit included in the work data management server 100, a plurality of functional units may be integrated into one functional unit, or one functional unit may be divided into a plurality of functional units for each function.

Note that the work data management server 100 is realized by using a physical computer, but may be realized by using a virtualization technology. In addition, the functions of the work data management server 100 may be realized using a computer system including a plurality of computers.

FIG. 4 is a diagram showing an example of a data structure of data stored in the work data DB 320 of the first embodiment.

The work data DB 320 stores work data 400. The work data 400 includes a work identifier 401, a data identifier 402, and a plurality of items 403.

The work identifier 401 is a field for storing an identifier of work. The data identifier 402 is a field for storing an identifier of work data. The item 403 is a field for storing an item value measured or acquired in an operation. The number of items 403 included in the work data 400 can be arbitrarily set.

FIG. 5A and FIG. 5B are diagrams showing an example of a data structure of data stored in the work flow DB 321 of the first embodiment.

The work flow DB 321 stores work flow metadata 500 and node data 510.

The work flow metadata 500 is data for managing an outline of a work flow. The work flow DB 321 stores the work flow metadata 500 as many as the number of work flows. The work flow metadata 500 includes a work identifier 501, a work flow identifier 502, and a generation date and time 503.

The work identifier 501 is a field for storing an identifier of work. The work flow identifier 502 is a field for storing an identifier of a work flow. The generation date and time 503 is a field for storing a date and time when a work flow is generated.

The node data 510 is data for managing nodes corresponding to operations constituting a work flow. In the following description, a node corresponding to an operation is also referred to as an operation node. For one work flow, as many pieces of node data 510 as the number of operations constituting the work flow are present. The node data 510 includes a work flow identifier 511, a node identifier 512, a previous node identifier 513, a subsequent node identifier 514, a data identifier 515, and a registration date and time 516.

The work flow identifier 511 is a field for storing an identifier of a work flow. The node identifier 512 is a field for storing an identifier of a node. The previous node identifier 513 is a field for storing an identifier of a previous node of a node corresponding to the node data 510. The subsequent node identifier 514 is a field for storing an identifier of a node after the node corresponding to the node data 510.

The data identifier 515 is a field for storing an identifier designating work data 400 of an operation corresponding to the node. The registration date and time 516 is a field for storing the final registration date and time of the work data 400.

For example, the user sets work flow definition information (the work flow metadata 500 and the node data 510) using the terminal 101 and registers the work flow definition information in the work data management server 100.

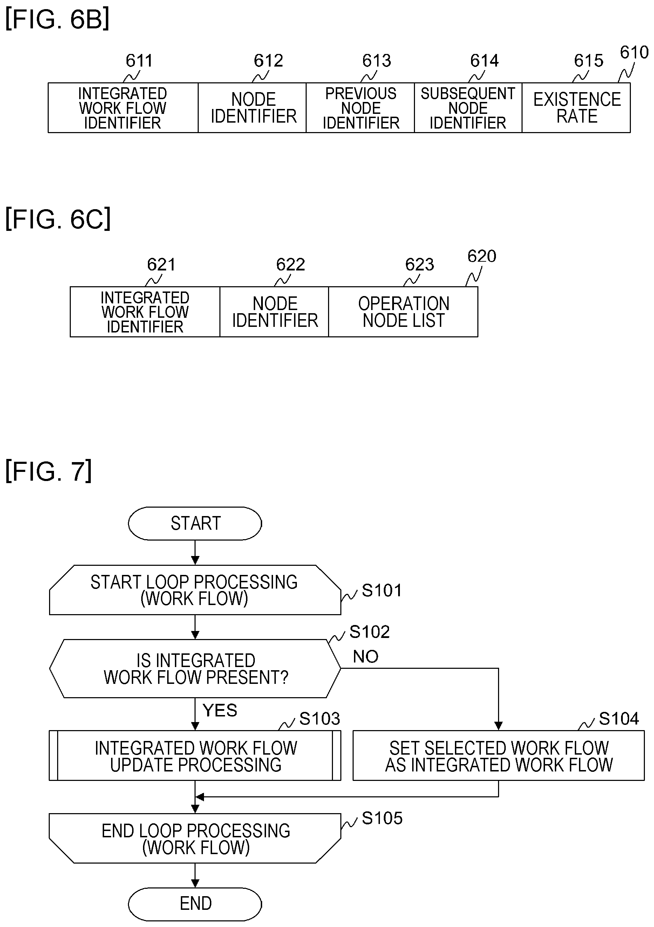

FIG. 6A, FIG. 6B, and FIG. 6C are diagrams showing an example of a data structure of data stored in the integrated work flow DB 322 of the first embodiment.

The integrated work flow DB 322 stores integrated work flow metadata 600, node data 610, and integrated node data 620.

The integrated work flow metadata 600 is data for managing the outline of an integrated work flow. The integrated work flow DB 322 stores as many pieces of integrated work flow metadata 600 as the number of integrated work flows. The integrated work flow metadata 600 includes a work identifier 601 and an integrated work flow identifier 602.

The work identifier 601 is a field for storing an identifier of work. The integrated work flow identifier 602 is a field for storing an identifier of an integrated work flow.

The node data 610 is data for managing nodes constituting an integrated work flow. For one integrated work flow, as many pieces of node data 610 as the number of nodes constituting the integrated work flow are present. The integrated work flow includes operation nodes and an integrated node in which a plurality of operation nodes are integrated. In the following description, when an operation node and an integrated node are not distinguished from each other, they are referred to as nodes.

The node data 610 includes an integrated work flow identifier 611, a node identifier 612, a previous node identifier 613, a subsequent node identifier 614, and an existence rate 615.

The integrated work flow identifier 611 is a field for storing an identifier of an integrated work flow. The node identifier 612 is a field for storing an identifier of a node. In the case of the operation node, the identifier of the operation node in the work flow is stored as it is, and in the case of the integrated node, the identifier assigned to the integrated node is stored.

The previous node identifier 613 is a field for storing an identifier of a previous node of a node corresponding to the node data 610. The subsequent node identifier 614 is a field for storing an identifier of a node after the node corresponding to the node data 610. The existence rate 615 is a field that stores the rate of work flows that include operation nodes corresponding to the node data 610 in work flows used to generate an integrated work flow. When a node is an integrated node, it is assumed that the existence rate of each operation node included in the integrated node is stored.

The integrated node data 620 is data for managing an integrated node. The integrated node data 620 includes an integrated work flow identifier 621, a node identifier 622, and an operation node list 623.

The integrated work flow identifier 621 is a field for storing an identifier of an integrated work flow. The node identifier 622 is a field for storing an identifier of an integrated node. The operation node list 623 is a field for storing identifiers of operation nodes constituting an integrated node.

Next, processing executed by the work data management server 100 will be described. The work data management server 100 executes integrated work flow generation processing and work data search processing using an integrated work flow. First, the integrated work flow generation processing will be described.

The work data management server 100 executes the integrated work flow generation processing periodically or upon receiving an execution instruction. FIG. 7 is a flowchart illustrating an example of integrated work flow generation processing executed by the work data management server 100 of the first embodiment. Here, it is assumed that a work identifier is designated.

The work data management server 100 starts loop processing of a work flow (step S101). Specifically, the work data management server 100 selects one work flow of work corresponding to the designated identifier from the work flow DB 321. Here, it is assumed that a work flow is selected in ascending order of the number of nodes. At this time, the generation date of the work flow may be considered. For example, a method of selecting a work flow in ascending order of the number of nodes and in order of oldest generation date is conceivable.

The work data management server 100 refers to the integrated work flow DB 322 and determines whether there is an integrated work flow corresponding to the designated work (step S102). That is, it is determined whether the integrated work flow metadata 600 in which the identifier of the designated work is set is present in the work identifier 601.

When there is no integrated work flow corresponding to the designated work in the integrated work flow DB 322, the work data management server 100 sets the selected work flow as an integrated work flow (step S104), and then proceeds to step S105.

Specifically, the work data management server 100 generates the integrated work flow metadata 600, and generates integrated node data 620 corresponding to the node data 510 of the selected work flow.

When there is an integrated work flow corresponding to the designated work in the integrated work flow DB 322, the work data management server 100 executes integrated work flow update processing (step S103), and then proceeds to step S105. Details of the integrated work flow update processing will be described later.

In step S105, the work data management server 100 determines whether processing has been completed for all work flows (step S105).

If processing has not been completed for all the work flows, the work data management server 100 returns to step S101 and executes similar processing. If processing has been completed for all the work flows, the work data management server 100 ends the integrated work flow generation processing.

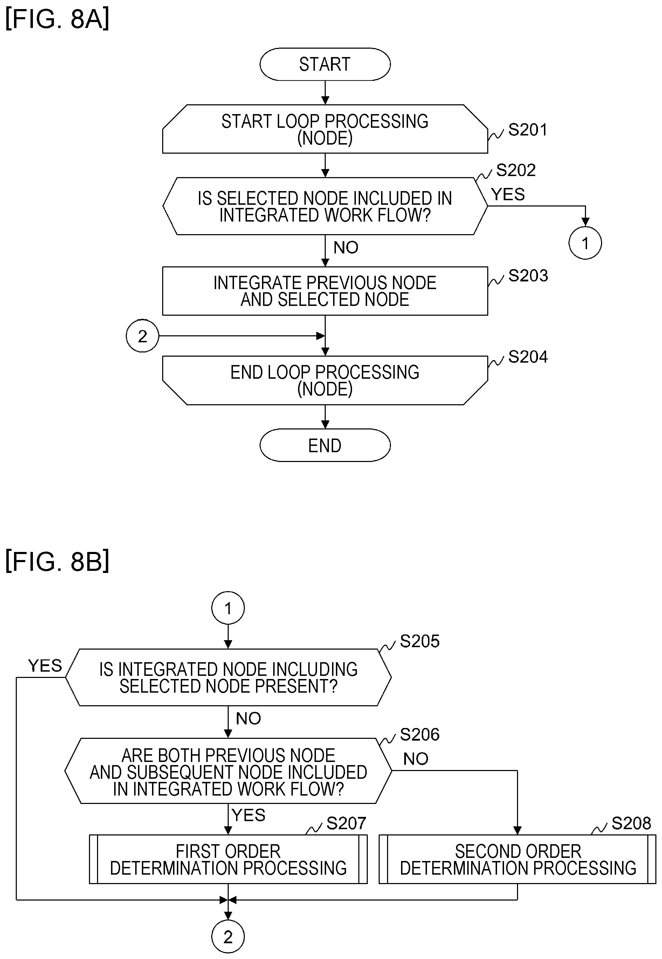

FIG. 8A and FIG. 8B are flowcharts illustrating an example of the integrated work flow update processing executed by the work data management server 100 of the first embodiment.

The work data management server 100 starts loop processing of nodes (step S201). Specifically, the work data management server 100 selects one node of a selected work flow. However, a node is selected in the execution order of operations.

The work data management server 100 determines whether the selected operation node is included in an integrated work flow (step S202). Specifically, the work data management server 100 determines whether there is node data 610 in which the value of the node identifier 612 matches the value of the node identifier 512 or integrated node data 620 in which the value of the node identifier 512 is included in the operation node list 623.

When the selected operation node is not included in the integrated work flow, the work data management server 100 integrates the operation node with a previous node of the selected operation node in the work flow (step S203), and then proceeds to step S204. Specifically, the following processing is executed.

(S203-1) The work data management server 100 refers to the node data 510 of the selected operation node to identify the previous node.

(S203-2) The work data management server 100 refers to the integrated work flow DB 322 and determines whether the node data 610 in which the identifier of the previous node is stored in the node identifier 612 is present.

(S203-3) When the node data 610 in which the identifier of the previous node is stored in the node identifier 612 is present, the work data management server 100 generates integrated node data 620 in which the identifiers of the previous node and the selected operation node are stored in the operation node list 623. The work data management server 100 determines the identifier of the integrated node and stores the identifier in the node identifier 622. The work data management server 100 rewrites the node identifier 612 of the searched node data 610 to the identifier of the integrated node. Thereafter, the work data management server 100 ends the processing of step S203.

(S203-4) When the node data 610 in which the identifier of the previous node is stored in the node identifier 612 is not present, the work data management server 100 searches for the integrated node data 620 in which the identifier of the previous node is stored in the operation node list 623, and stores the identifier of the selected operation node in the operation node list 623 of the integrated node data 620. Thereafter, the work data management server 100 ends the processing of step S203.

Note that the selected operation node and a subsequent node of the operation node may be integrated. In this manner, an operation that is not included in at least one work flow is integrated with the previous operation or the subsequent operation.

In step S204, the work data management server 100 determines whether processing has been completed for all the nodes of the selected work flow (step S204).

If the processing has not been completed for all the nodes of the selected work flow, the work data management server 100 returns to step S201 and executes similar processing. If the processing has been completed for all the nodes of the selected work flow, the work data management server 100 ends the integrated work flow update processing.

If it is determined in step S202 that the selected operation node is included in the integrated work flow, the work data management server 100 determines whether there is an integrated node including the operation node (step S205). Specifically, it is determined whether the integrated node data 620 in which the identifier of the selected operation node is stored in the operation node list 623 is present.

If there is an integrated node including the selected operation node, the work data management server 100 proceeds to step S204.

If there is no integrated node including the selected operation node, the work data management server 100 determines whether both the previous node and the subsequent node of the selected operation node in the work flow are included in the integrated work flow (step S206).

Specifically, the work data management server 100 identifies a previous node and a subsequent node of the selected operation node in the selected work flow on the basis of the node data 510 of the selected operation node. The work data management server 100 determines, for each of the previous node and the subsequent node, whether there is node data 610 in which an identifier of a node (previous node or subsequent node) is stored in the node identifier 612 or integrated node data 620 in which the identifier of the node (previous node or subsequent node) is stored in the operation node list 623.

When both the previous node and the subsequent node of the selected operation node in the work flow are included in the integrated work flow, the work data management server 100 executes first order determination processing (step S207), and then proceeds to step S204. Details of the first order determination processing will be described later.

When at least one of the previous node and the subsequent node of the selected operation node in the work flow is not included in the integrated work flow, the work data management server 100 executes second order determination processing (step S208), and then proceeds to step S204. Details of the second order determination processing will be described later.

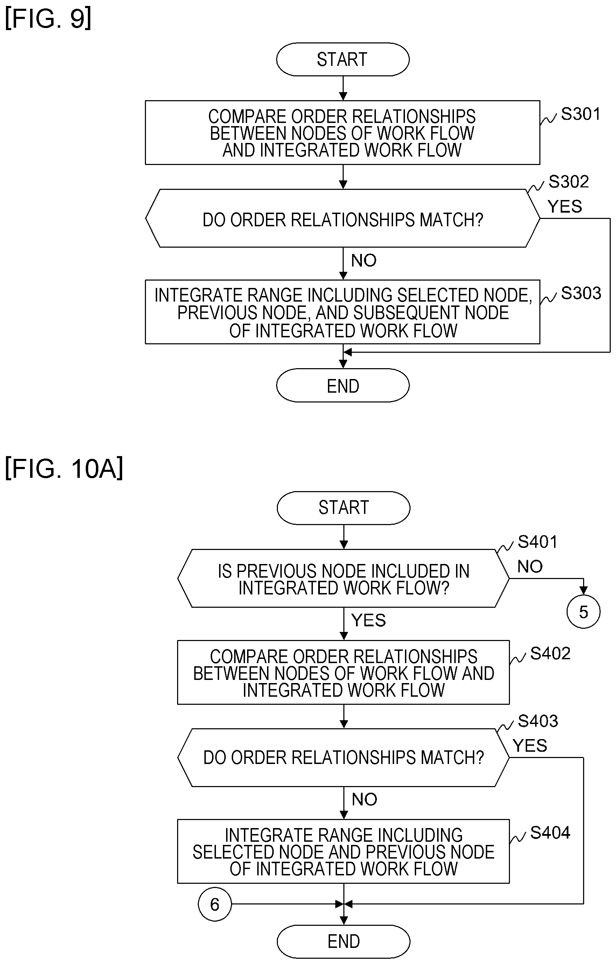

FIG. 9 is a flowchart illustrating an example of the first order determination processing executed by the work data management server 100 of the first embodiment.

The work data management server 100 compares the order relationship between a selected operation node, a previous node, and a subsequent node in a work flow with the order relationship between a selected operation node, a previous node, and a subsequent node in an integrated work flow (step S301).

Specifically, the work data management server 100 identifies the order relationship between the selected operation node, the previous node, and the subsequent node in the integrated work flow with reference to the integrated work flow DB 322. When any one of the operation node, the previous node, and the subsequent node is included in an integrated node, the order relationship between the integrated node and other two operation nodes is compared with the order relationship between the selected operation node, the previous node, and the subsequent node in the work flow.

The work data management server 100 determines whether the order relationships match on the basis of the comparison result (step S302).

When the order relationships match, the work data management server 100 ends the first order determination processing.

When the order relationships do not match, the work data management server 100 integrates the nodes in the range (integration range) including the selected operation node, the previous node, and the subsequent node of the integrated work flow (step S303). Thereafter, the work data management server 100 ends the first order determination processing. Specifically, the following processing is executed.

(S303-1) The work data management server 100 determines whether two or more integrated nodes are included in the nodes included in the integration range.

(S303-2) When two or more integrated nodes are included in the nodes included in the integration range, the work data management server 100 generates one piece of integrated node data 620 by merging the integrated node data 620 corresponding to the integrated nodes. The work data management server 100 registers the identifiers of the operation nodes included in the integration range in the operation node list 623 of the generated integrated node data 620.

The work data management server 100 generates node data 610 corresponding to the newly generated integrated node. A value of a node identifier 622 is set to a node identifier 612. In the previous node identifier 613, a value of the previous node identifier 613 of the integrated node data 620 of the node in the earliest order among the nodes included in the integration range is set. In the subsequent node identifier 614, a value of the subsequent node identifier 614 of the integrated node data 620 of the node in the latest order among the nodes included in the integration range is set.

The work data management server 100 deletes the node data 610 of the operation nodes in the integration range. Thereafter, the work data management server 100 ends the processing of step S303.

(S303-3) When two or more integrated nodes are not included in the nodes included in the integration range, the work data management server 100 determines whether one integrated node is included in the integration range.

(S303-4) When one integrated node is included in the nodes included in the integration range, the work data management server 100 registers the identifiers of the operation nodes included in the integration range in the operation node list 623 of the integrated node data 620 corresponding to the integrated node. In addition, in the previous node identifier 613, a value of the previous node identifier 613 of the node data 610 of the node in the earliest order among the nodes included in the integration range is set. In the subsequent node identifier 614, a value of the subsequent node identifier 614 of the node data 610 of the node in the latest order among the nodes included in the integration range is set.

The work data management server 100 deletes the node data 610 of the operation nodes included in the integration range. Thereafter, the work data management server 100 ends the processing of step S303.

(S303-5) When no integrated node is included in the nodes included in the integration range, the work data management server 100 generates integrated node data 620. The work data management server 100 sets an identifier in the integrated work flow identifier 621, sets an identifier of an integrated node in the node identifier 622, and sets identifiers of operation nodes included in the integration range of the operation node list 623. The work data management server 100 generates node data 610 corresponding to an integrated node. In the previous node identifier 613, a value of the previous node identifier 613 of the node data 610 of the operation node in the earliest order in the integration range is set. In the subsequent node identifier 614, a value of the subsequent node identifier 614 of the node data 610 of the operation node in the latest order among the nodes included in the integration range is set.

The work data management server 100 deletes the node data 610 of the operation nodes included in the integration range. Thereafter, the work data management server 100 ends the processing of step S303.

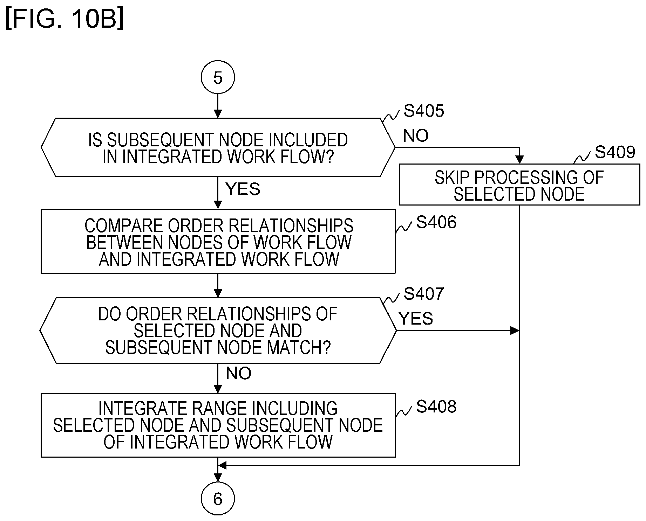

FIG. 10A and FIG. 10B are flowcharts illustrating an example of the second order determination processing executed by the work data management server 100 of the first embodiment.

The work data management server 100 determines whether a previous node of a selected operation node in a work flow is included in an integrated work flow (step S401).

When the previous node of the selected operation node in the work flow is included in the integrated work flow, the work data management server 100 compares the order relationship between the selected operation node and the previous node in the work flow with the order relationship between the selected operation node and the previous node in the integrated work flow (step S402).

The work data management server 100 determines whether the order relationships match on the basis of the comparison result (step S403). That is, in the integrated work flow, it is determined whether the order of the previous nodes is before the order of the operation node.

When the order relationships match, the work data management server 100 ends the second order determination processing.

When the order relationships do not match, the work data management server 100 integrates the nodes in the range (integration range) including the selected operation node and the previous node of the integrated work flow (step S404). Thereafter, the work data management server 100 ends the second order determination processing. Since the processing in step S404 is similar to the processing in step S303, detailed description thereof will be omitted.

In step S401, when the previous node of the selected operation node in the work flow is not included in the integrated work flow, the work data management server 100 determines whether the subsequent node of the selected operation node in the work flow is included in the integrated work flow (step S405).

When the subsequent node of the selected operation node in the work flow is included in the integrated work flow, the work data management server 100 compares the order relationship between the selected operation node and the subsequent node in the work flow with the order relationship between the selected operation node and the subsequent node in the integrated work flow (step S406).

The work data management server 100 determines whether the order relationships match on the basis of the comparison result (step S407). That is, in the integrated work flow, it is determined whether the order of the subsequent node is after the order of the operation node.

When the order relationships match, the work data management server 100 ends the second order determination processing.

When the order relationships do not match, the work data management server 100 integrates the nodes in the range (integration range) including the selected operation node and the subsequent node of the integrated work flow (step S408). Thereafter, the work data management server 100 ends the second order determination processing. Since the processing in step S408 is similar to the processing in step S303, detailed description thereof will be omitted.

In step S405, when the subsequent node of the selected operation node in the work flow is not included in the integrated work flow, the work data management server 100 skips processing of the selected operation node and ends the second order determination processing. For the selected operation node, processing is executed again after processing of other operation nodes is executed.

In the first order determination processing and the second order determination processing, operation groups having different order relationships are integrated.

The method of generating an integrated work flow described above is an example, and the present invention is not limited thereto. Any processing may be used as long as the processing can integrate a plurality of operations having different order relationships between work flows and can integrate an operation that is not included in at least one work flow and at least one of an operation executed before the operation and an operation executed after the operation.

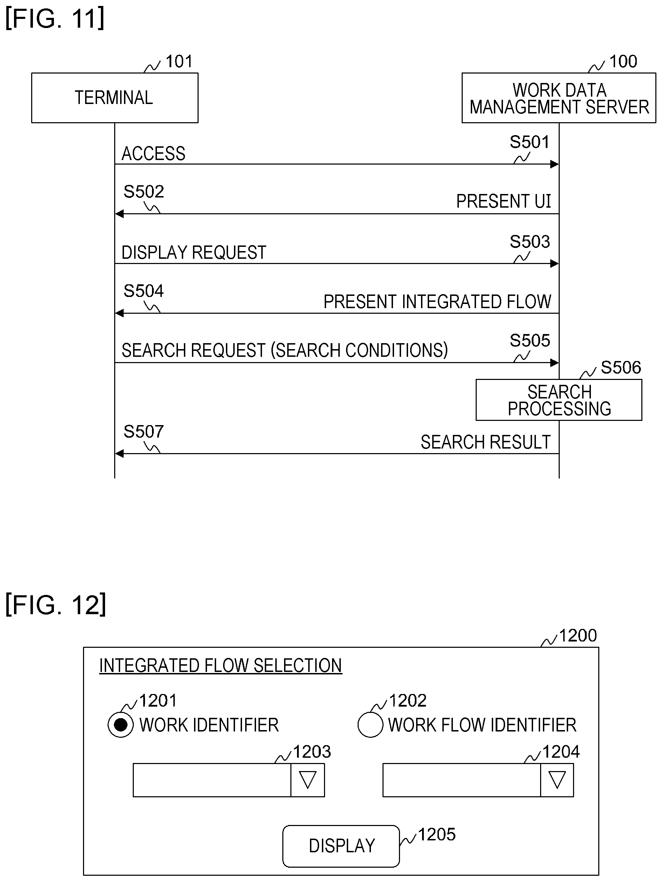

Next, work data search processing using an integrated work flow will be described. FIG. 11 is a sequence diagram illustrating a flow of work data search processing in the system of the first embodiment.

The user accesses the work data management server 100 in order to search for work data using the terminal 101 (step S501).

The work data management server 100 presents a screen for receiving designation of an integrated work flow (step S502). For example, a screen 1200 as illustrated in FIG. 12 is presented.

The screen 1200 includes radio buttons 1201 and 1202, input fields 1203 and 1204, and a manipulation button 1205. The radio buttons 1201 and 1202 are radio buttons for selecting information used to designate an integrated work flow. The input fields 1203 and 1204 are fields for inputting various identifiers. The manipulation button 1205 is a manipulation button for instructing display of an integrated work flow.

In the case of using a work identifier, the user manipulates the radio button 1201 to input a work identifier in the input field 1203. In the case of using a work flow identifier, the user manipulates the radio button 1202 to input a work flow identifier in the input field 1204.

When the user manipulates the manipulation button 1205, the terminal 101 transmits a display request including identification information input by the user to the work data management server 100 (step S503).

The work data management server 100 searches for the corresponding integrated work flow and presents a screen displaying the integrated work flow (step S504).

When the display request includes a work identifier, the work data management server 100 searches integrated work flow metadata 600 including the work identifier with reference to the integrated work flow DB 322.

When the display request includes a work flow identifier, the work data management server 100 searches for work flow metadata 500 including the work flow identifier with reference to the work flow DB 321, and acquires a work identifier from the work flow metadata 500. The work data management server 100 searches for the integrated work flow metadata 600 including the acquired work identifier with reference to the integrated work flow DB 322.

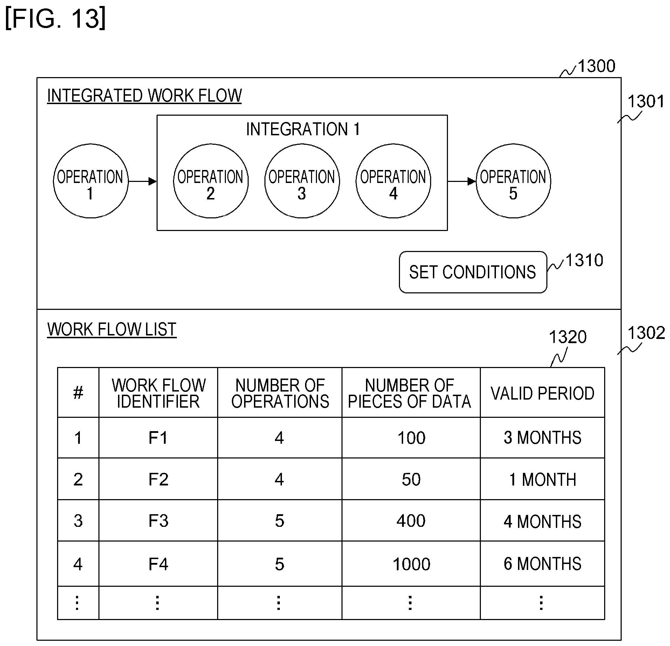

The work data management server 100 presents a screen 1300 as illustrated in FIG. 13, for example. The screen 1300 includes display fields 1301 and 1302.

The display field 1302 is a field for displaying a work flow used when an integrated work flow is generated. The display field 1302 displays a list 1320 of work flows. The display field 1301 is a field for displaying an integrated work flow. In the display field 1301, a directed graph corresponding to the integrated work flow and a manipulation button 1310 are displayed. The manipulation button 1310 is a manipulation button for setting a search condition of a work flow.

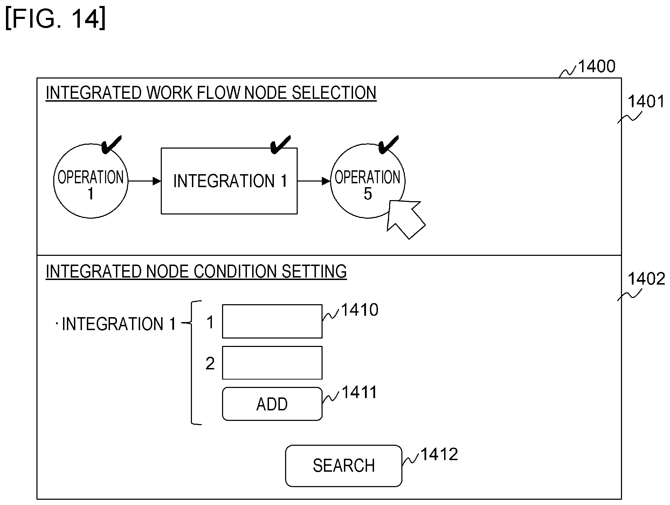

When the manipulation button 1310 is manipulated, the work data management server 100 presents a screen 1400 as illustrated in FIG. 14. The screen 1400 includes setting fields 1401 and 1402.

The setting field 1401 is a field for selecting a node of an integrated work flow used for search. The user selects a node to be used for search by clicking a node of the integrated work flow displayed in the setting field 1401.

The setting field 1402 is a field for setting an operation node and an order used for search among the operation nodes included in an integrated node. The setting field 1402 includes an input field 1410 and manipulation buttons 1411 and 1412. The input field 1410 is a field for inputting an identifier of an operation node used for search. In the present embodiment, it is assumed that operation nodes are set in the execution order. The manipulation button 1411 is a manipulation button for adding the input field 1410. The manipulation button 1412 is a manipulation button for instructing search of a work flow.

The user can set search conditions using the screen 1400. When the user manipulates the manipulation button 1412, the terminal 101 transmits a search request including search conditions to the work data management server 100 (step S505).

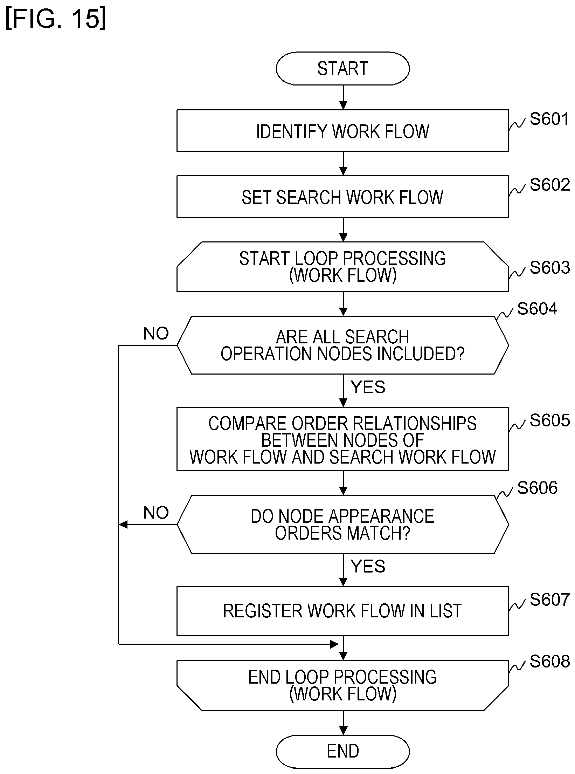

The work data management server 100 executes work flow search processing (step S506). Here, the work flow search processing will be described. FIG. 15 is a flowchart illustrating an example of the work flow search processing executed by the work data management server 100 of the first embodiment.

The work data management server 100 identifies work flows to be processed (step S601). Specifically, the work data management server 100 searches for work flow metadata 500 in which the value of the work identifier 601 of the integrated work flow metadata 600 is stored in the work identifier 501.

The work data management server 100 sets a search work flow on the basis of search conditions (step S602). In the following description, operation nodes of the search work flow will be referred to as search operation nodes.

The search work flow is generated from operation nodes selected in an integrated work flow and operation nodes selected in an integrated node.

The work data management server 100 starts loop processing of work flows (step S603). Specifically, the work data management server 100 selects one work flow from the work flows identified in step S601.

The work data management server 100 determines whether the selected work flow includes all search operation nodes (step S604).

When the selected work flow does not include at least one search operation node, the work data management server 100 proceeds to step S608.

When the selected work flow includes all the search operation nodes, the work data management server 100 compares the order relationship between the search operation nodes in the search work flow with the order relationship between the search operation nodes in the selected work flow (step S605).

The work data management server 100 determines whether the order relationships match on the basis of the comparison result (step S606).

When the order relationships do not match, the work data management server 100 proceeds to step S608.

When the order relationships match, the work data management server 100 registers the selected work flow in the list (step S607), and then proceeds to step S608.

In step S608, the work data management server 100 determines whether processing has been completed for all the work flows identified in step S601 (step S608).

If processing has not been completed for all the work flows identified in step S601, the work data management server 100 returns to step S603 and executes similar processing.

If processing has been completed for all the work flows identified in step S601, the work data management server 100 ends the work flow search processing.

The work flow search processing has been described. The description returns to FIG. 11.

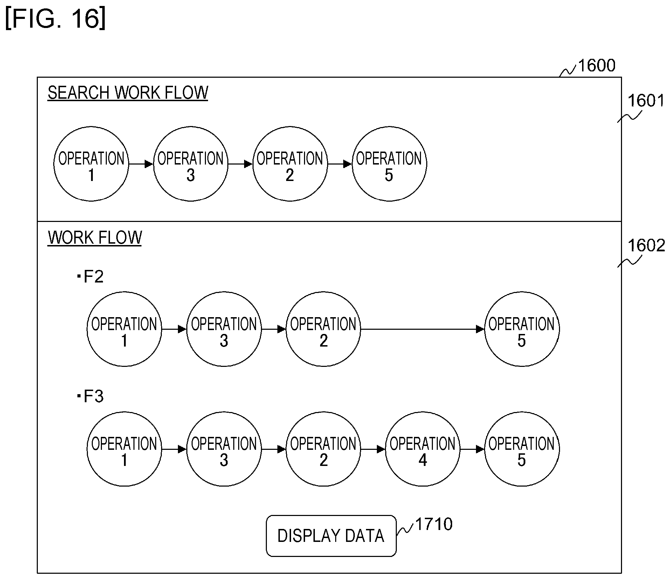

The work data management server 100 presents the work flow registered in the list in the work flow search processing as a search result (step S507). The work data management server 100 presents a screen 1600 as shown in FIG. 16, for example. The screen 1600 includes display fields 1601 and 1602. The display field 1601 is a field for displaying a search work flow. The display field 1602 is a field for displaying a searched work flow. The display field 1602 includes a manipulation button 1610. The manipulation button 1610 is a manipulation button for instructing display of work data 400 related to a searched work flow.

When the manipulation button 1610 is manipulated, the terminal 101 transmits a work data display request including identification information of a work flow. The work data management server 100 identifies the work data 400 related to the work flow with reference to the work flow DB 321, acquires the identified work data from the work data DB 320, and presents the work data 400 to the user.

According to the first embodiment, the work data management server 100 can present, to the user, an integrated work flow for searching for work flows with different orders of operation nodes and different included operation nodes. The user can easily set conditions for a work flow to be searched (search work flow) by using the integrated work flow.

In addition, the work data management server 100 can search for a work flow on the basis of the search work flow and present work data related to the work flow. As a result, it is possible to analyze operation content and the execution order for the purpose of improving the work efficiency and the like.

### Second embodiment

A second embodiment is different from the first embodiment with respect to a method of setting a search work flow. The second embodiment will be described focusing on differences from the first embodiment.

The configuration of a system of the second embodiment is the same as that of the first embodiment. The configurations of a work data collection device 110 and a work data management server 100 of the second embodiment are the same as those of the first embodiment. Integrated work flow generation processing of the second embodiment is the same as that of the first embodiment.

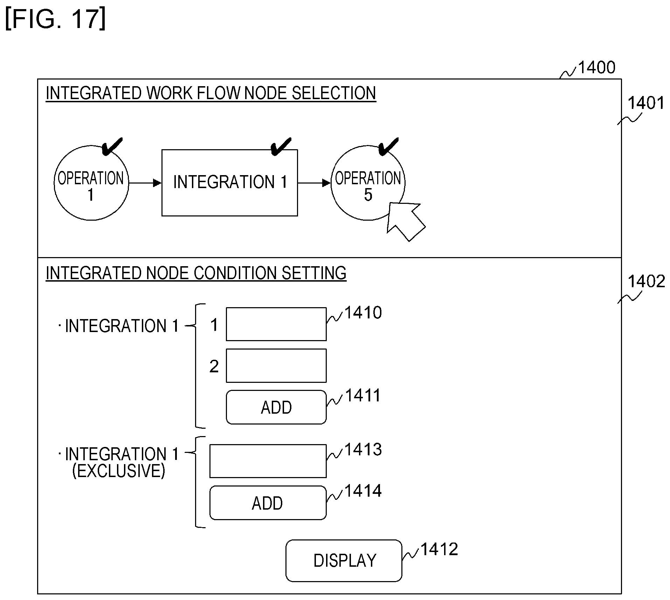

In The second embodiment, a method of setting a search work flow is different. FIG. 17 is a diagram showing an example of a screen presented by the work data management server 100 of the second embodiment. The screen 1400 of the second embodiment has some different setting items in the setting field 1402. Specifically, an input field 1413 and a manipulation button 1414 are included. The input field 1413 is a field for inputting an identifier of an operation node to be excluded. The manipulation button 1414 is a manipulation button for adding the input field 1413.

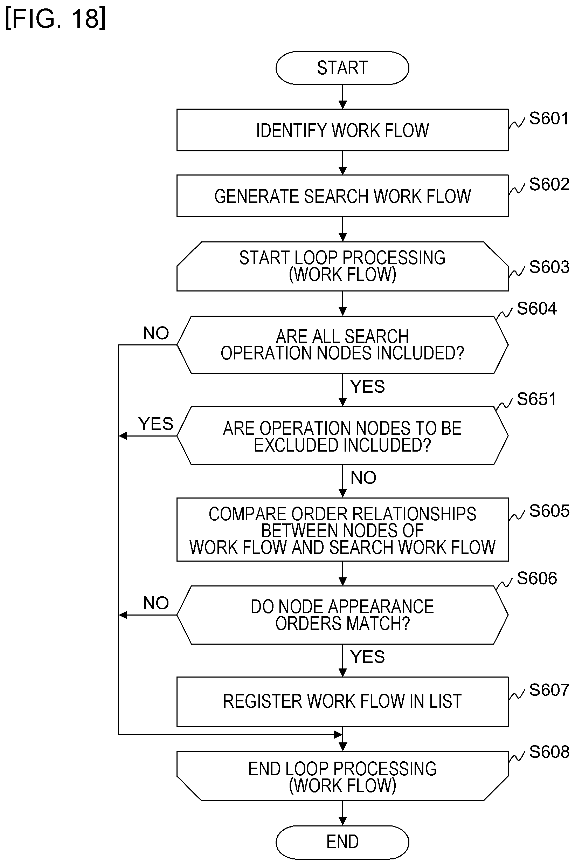

FIG. 18 is a flowchart illustrating an example of work flow search processing executed by the work data management server 100 of the first embodiment.

When the selected work flow includes all the search operation nodes in step S604, the work data management server 100 determines whether an operation node to be excluded is included in the selected work flow (step S651).

When the operation node to be excluded is included in the selected work flow, the work data management server 100 proceeds to step S608.

When no operation node to be excluded is included in the selected work flow, the work data management server 100 proceeds to step S605.

An integrated node also includes an operation node that is not included in at least one work flow. Therefore, according to the second embodiment, it is possible to search for a work flow that does not include a specific operation.

Note that the present invention is not limited to the above-described embodiments, and includes various modified examples. In addition, for example, the above-described embodiments have been described in detail in order to describe the present invention in an easy-to-understand manner, and are not necessarily limited to those having all the described configurations. In addition, it is possible to add, delete, and replace other configurations for a part of the configuration of each embodiment.

In addition, some or all of the above-described configurations, functions, processing units, processing means, and the like may be realized by hardware, for example, by designing with an integrated circuit. In addition, the present invention can also be realized by a program code of software that realizes the functions of the embodiments. In this case, a storage medium in which the program code is recorded is provided to a computer, and a processor included in the computer reads the program code stored in the storage medium. In this case, the program code itself read from the storage medium realizes the functions of the above-described embodiments, and the program code itself and the storage medium storing the program code constitute the present invention. As a storage medium for supplying such a program code, for example, a flexible disk, a CD-ROM, a DVD-ROM, a hard disk, a solid state drive (SSD), an optical disc, a magneto-optical disk, a CD-R, a magnetic tape, a nonvolatile memory card, a ROM, or the like is used.

In addition, the program code for realizing the functions described in the present embodiment can be implemented by a wide range of programs or script languages such as assembler, C/C++, perl, Shell, PHP, Python, and Java.

Furthermore, a program code of software that realizes the functions of the embodiments may be distributed via a network to be stored in a storage means such as a hard disk or a memory of a computer or a storage medium such as a CD-RW or a CD-R, and a processor included in the computer may read and execute the program code stored in the storage means or the storage medium.

In the above-described embodiments, the control lines and the information lines indicate what is considered to be necessary for the description, and do not necessarily indicate all the control lines and the information lines on the product. All the components may be connected to each other.

## Claims

1. A computer system comprising:
a processor;
a storage device connected to the processor; and
a network interface connected to the processor,
the computer system being configured to:
for each of work flows defining procedures of a plurality of operations, hold work data acquired in work based on the work flow;
manage the work flow as a directed graph in which one operation is set as one operation node;
compare the plurality of work flows;
generate an integrated node by executing, on the basis of a result of the comparison, at least one of processing of integrating the plurality of operations having different order relationships among the work flows and processing of integrating the operation not included in at least one of the work flows and at least one of the operation executed before the operation and the operation executed after the operation;
generate a directed graph including at least one operation node and at least one integrated node that are not integrated as an integrated work flow for searching for the plurality of work flows, and present the generated directed graph to a user.

2. The computer system according to claim 1,
wherein the computer system presents an interface that displays the integrated work flow and receives conditions for searching for the work flow,
wherein the interface includes:
a first setting field through which the user selects the operation nodes and the integrated node to be used for search from the operation nodes and the integrated node included in the integrated work flow; and
a second setting field through which the user selects the operation nodes to be used for search from the operation nodes included in the integrated node, and the user designates an order of the selected operation nodes, and
wherein the computer system is configured to:
generate a search work flow including search operation nodes that are operation nodes selected through the first setting field and the second setting field;
search for the work flow including all the search operation nodes, in which the order of the search operation nodes matches the order in the search work flow, and present the work flow to the user; and
output the work data of the work flow designated by the user.

3. The computer system according to claim 1,
wherein the computer system presents an interface that displays the integrated work flow and receives conditions for searching for the work flow,
wherein the interface includes:
a first setting field through which the user selects the operation nodes and the integrated node to be used for search from the operation nodes and the integrated node included in the integrated work flow;
a second setting field through which the user selects the operation nodes to be used for search from the operation nodes included in the integrated node, and the user designates an order of the selected operation nodes; and
a third setting field for selecting the operation node not to be used for search from the operation nodes included in the integrated node, and
wherein the computer system is configured to:
generate a search work flow including search operation nodes that are operation nodes selected through the first setting field and the second setting field;
search for the work flow which does not include the operation node selected through the third setting field and includes all the search operation nodes, in which an order of the search operation nodes matches an order in the search work flow, and present the work flow to the user; and
output the work data of the work flow designated by the user.

4. A search support method executed by a computer system,
wherein the computer system
includes: a processor; a storage device connected to the processor; and a network interface connected to the processor, and
is configured to:
for each of work flows defining procedures of a plurality of operations, hold work data acquired in work based on the work flow; and
manage the work flow as a directed graph in which one operation is set as one operation node, the search support method comprising:
a step of comparing the plurality of work flows by the computer system;
a step of generating, by the computer system, an integrated node by executing, on the basis of a result of the comparison, at least one of processing of integrating the plurality of operations having different order relationships among the work flows and processing of integrating the operation not included in at least one of the work flows and at least one of the operation executed before the operation and the operation executed after the operation; and
a step of generating a directed graph including at least one operation node and at least one integrated node that are not integrated as an integrated work flow for searching for the plurality of work flows, and presenting the generated directed graph to a user, by the computer system.

5. The search support method according to claim 4, comprising a step of presenting, by the computer system, an interface that displays the integrated work flow and receives conditions for searching for the work flow,
wherein the interface includes:
a first setting field through which the user selects the operation nodes and the integrated node to be used for search from the operation nodes and the integrated node included in the integrated work flow; and
a second setting field through which the user selects the operation nodes to be used for search from the operation nodes included in the integrated node, and the user designates an order of the selected operation nodes,
the search support method comprising:
a step of generating, by the computer system, a search work flow including search operation nodes that are operation nodes selected through the first setting field and the second setting field;
a step of searching for the work flow including all the search operation nodes, in which the order of the search operation nodes matches the order in the search work flow, and presenting the work flow to the user, by the computer system; and
a step of outputting, by the computer system, the work data of the work flow designated by the user.

6. The search support method according to claim 4, comprising a step of presenting, by the computer system, an interface that displays the integrated work flow and receives conditions for searching for the work flow,
wherein the interface includes:
a first setting field through which the user selects the operation nodes and the integrated node to be used for search from the operation nodes and the integrated node included in the integrated work flow;
a second setting field through which the user selects the operation nodes to be used for search from the operation nodes included in the integrated node, and the user designates an order of the selected operation nodes; and
a third setting field for selecting the operation node not to be used for search from the operation nodes included in the integrated node,
the search support method comprising:
a step of generating, by the computer system, a search work flow including search operation nodes that are operation nodes selected through the first setting field and the second setting field;
a step of searching for the work flow which does not include the operation node selected through the third setting field and includes all the search operation nodes, in which an order of the search operation nodes matches an order in the search work flow, and presenting the work flow to the user, by the computer system; and
a step of outputting, by the computer system, the work data of the work flow designated by the user.
